# EUROPEAN PATENT APPLICATION

(11) **EP 2 779 047 A1**
(43) Date of publication of application: **17.09.2014**
(21) Application number: 14159335.0
(22) Date of filing: 13.03.2014
(51) Int. Cl.: G06Q 10/06, G06Q 10/00, G06Q 50/30

(54) **System and method for estimating maintenance task durations**

(30) Priority: 15.03.2013 US 201313841532
(71) Applicant: General Electric Company, Schenectady, New York 12345 (US)
(72) Inventor: Subbu, Rajesh V., Clifton Park, NY New York 12065 (US); Aragones, James Kenneth, Niskayuna, NY New York 12309 (US); Dunsdon, Jonathan Mark, Niskayuna, NY New York 12309 (US); Schoonveld, Steve John, Niskayuna, NY New York 12309 (US); Harrington, Mark Thomas, Niskayuna, NY New York 12309 (US); Watson, Maria Louise, Niskayuna, NY New York 12309 (US)
(74) Representative: Williams, Andrew Richard

(57) **Abstract**

A system (200) for estimating maintenance task duration is provided. The system (200) comprising at least one computing system (120) comprising at least one database (164) comprising a plurality of historical maintenance task events (322), each historical maintenance task event of said plurality of historical maintenance task events (322) comprising a plurality of event factors. The database also comprises a plurality of baseline task durations (320), each baseline task duration of said plurality of baseline task durations (320) associated with a maintenance task. The computing system (120) also comprises at least one query module (202) configured to receive a query (310) comprising a first query maintenance task (312) and a plurality of query factors (314, 316). The at least one query module (202) is also configured to identify an initial baseline task duration (422) and a plurality of baseline task factors (422) from one of said plurality of baseline task durations (320) and said plurality of historical maintenance task events (322) based at least in part on said first query maintenance task (312). The at least one query module (202) is further configured to identify at least one adjustment factor (432) based at least in part on the differences between said plurality of query factors (314, 316) and said plurality of baseline task factors (422). The at least one query module (202) is also configured to calculate a maintenance task duration estimate (442) based at least in part on said initial baseline task duration (422) and said one or more adjustment factors (432). The at least one query module (202) is further configured to plan execution of the first query maintenance task (312) based at least in part on the maintenance task duration estimate (442).

## Description

### BACKGROUND

The embodiments described herein relate generally to maintenance tasks and, more particularly, to system and method for estimating maintenance task durations for complex machinery such as aircraft.

Accurate task duration estimation is a critical and pervasive activity across many industries. When complex equipment is relied upon in a commercial setting to provide capability, such as production capacity, transportation, and information processing, maintenance task duration becomes an important planning tool for minimizing the time that the equipment is out of service. A commercial aircraft is one such example of a complex piece of equipment requiring regular maintenance. Airline operators often manage and maintain hundreds of aircraft. Timely estimation and completion of maintenance tasks is a significant factor in reducing times that aircraft are out of service, reducing delays to airline customers, and to the airline's financial performance.

Some known methods of estimating maintenance task durations use rule-based models for estimating maintenance task durations associated with complex machinery. However, once the rules are created, they are essentially static and do not adapt with time as more information becomes available. For example, a certain maintenance task on a specific type of aircraft may be estimated by the manufacturer to take 5 hours. This standard estimate is typically an approximation, often resulting in a poor estimate of the time actually required to perform the task. Such estimations do not account for environmental and situational factors such as the weather at a service location, the experience of a given maintenance crew that will be performing the maintenance task, the presence or absence of equipment that facilitate more expeditious completion of the task, or the potential of combining related maintenance tasks to leverage similarities or simultaneous working and minimize the total time an aircraft is out of service.

### BRIEF DESCRIPTION

In one aspect, a computer-implemented method for estimating maintenance task durations is provided. The method is implemented by at least one computing system including at least one processor and at least one memory device coupled to the at least one processor. The method includes receiving a query including a first query maintenance task and a plurality of query factors. The method also includes identifying an initial baseline task duration based at least in part on the first query maintenance task. The initial baseline task duration includes a plurality of baseline task factors. The method further includes identifying at least one adjustment factor based at least in part on the differences between the plurality of query factors and the plurality of baseline task factors. The method also includes calculating a maintenance task duration estimate based at least in part on the initial baseline task duration and the one or more adjustment factors. The method further includes planning execution of the first query maintenance task based at least in part on the maintenance task duration estimate.

In a further aspect, a system for estimating maintenance task duration is provided. The system includes at least one computing system. The at least one computing system includes at least one database. The at least one database includes a plurality of historical maintenance task events. Each historical maintenance task event of the plurality of historical maintenance task events includes a plurality of event factors. The at least one database also includes a plurality of baseline task durations. Each baseline task duration of the plurality of baseline task durations is associated with a maintenance task. The at least one computing system also includes at least one query module. The at least one query module is configured to receive a query comprising a first query maintenance task and a plurality of query factors. The at least one query module is also configured to identify an initial baseline task duration from one of the plurality of baseline task durations and the plurality of historical maintenance task events based at least in part on said first query maintenance task. The initial baseline task duration includes a plurality of baseline task factors. The at least one query module is further configured to identify at least one adjustment factor based at least in part on the differences between the plurality of query factors and the plurality of baseline task factors. The at least one query module is also configured to calculate a maintenance task duration estimate based at least in part on the initial baseline task duration and the one or more adjustment factors. The at least one query module is further configured to plan execution of the first query maintenance task based at least in part on the maintenance task duration estimate.

In yet another aspect, one or more computer-readable storage media having computer-executable instructions embodied thereon are provided. When executed by at least one processor, the computer-executable instructions cause the processor to receive a query comprising a first query maintenance task and a plurality of query factors. The computer-executable instructions also cause the processor to identify an initial baseline task duration based at least in part on the first query maintenance task. The initial baseline task duration includes a plurality of baseline task factors. The computer-executable instructions further cause the processor to identify one or more adjustment factors based at least in part on the differences between the plurality of query factors and the plurality of baseline task factors. The computer-executable instructions also cause the processor to calculate a maintenance task duration estimate based at least in part on the initial baseline task duration and the adjustment factors. The computer-executable instructions further cause the processor to plan execution of the first query maintenance task based at least in part on the maintenance task duration estimate

### DRAWINGS

These and other features, aspects, and advantages of the present invention will become better understood when the following detailed description is read with reference to the accompanying drawings in which like characters represent like parts throughout the drawings, wherein:
FIG. 1 is a block diagram of an exemplary computing system that may be used for estimating maintenance task durations;
FIG. 2 is a simplified block diagram of an exemplary server architecture including the computing device shown in FIG. 1;
FIG. 3 is a data flow diagram of an exemplary plurality of data sources that may be used by the query module shown in FIG. 2 during estimation of maintenance task durations; and
FIG. 4 is a block diagram of an exemplary method for estimating maintenance task durations using the query module shown in FIG. 2 and data from the data sources shown in FIG. 3.

Unless otherwise indicated, the drawings provided herein are meant to illustrate features of embodiments of the disclosure. These features are believed to be applicable in a wide variety of systems comprising one or more embodiments of the disclosure. As such, the drawings are not meant to include all conventional features known by those of ordinary skill in the art to be required for the practice of the embodiments disclosed herein.

### DETAILED DESCRIPTION

In the following specification and the claims, reference will be made to a number of terms, which shall be defined to have the following meanings.

The singular forms "a", "an", and "the" include plural references unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that may permissibly vary without resulting in a change in the basic function to which it is related. Accordingly, a value modified by a term or terms, such as "about" and "substantially", are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

As used herein, the term "non-transitory computer-readable media" is intended to be representative of any tangible computer-based device implemented in any method or technology for short-term and long-term storage of information, such as, computer-readable instructions, data structures, program modules and sub-modules, or other data in any device. Therefore, the methods described herein may be encoded as executable instructions embodied in a tangible, non-transitory, computer readable medium, including, without limitation, a storage device and/or a memory device. Such instructions, when executed by a processor, cause the processor to perform at least a portion of the methods described herein. Moreover, as used herein, the term "non-transitory computer-readable media" includes all tangible, computer-readable media, including, without limitation, non-transitory computer storage devices, including, without limitation, volatile and nonvolatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

As used herein, a database may include any collection of data including hierarchical databases, relational databases, flat file databases, object-relational databases, object oriented databases, and any other structured collection of records or data that is stored in a computer system. The above examples are exemplary only, and thus are not intended to limit in any way the definition and/or meaning of the term database. Examples of databases include, but are not limited to only including, Oracle® Database, MySQL, IBM® DB2, Microsoft® SQL Server, Sybase®, and PostgreSQL. However, any database may be used that enables the systems and methods described herein.

As used herein, the term "maintenance durations" refers, generally, to a time associated with performing a maintenance task and, more particularly, to an estimated time to perform a maintenance task. A "historical maintenance duration", however, refers to an actual time taken to perform a maintenance task, i.e., for a real event already performed. Further, as used herein, a "manual duration" is an estimated time to perform a maintenance task which is provided by the manufacturer or some other external source as a "default" estimate.

The exemplary systems and methods described herein allow a user to estimate maintenance task durations for complex machinery. More specifically, the system is used to estimate maintenance task durations for aircraft by leveraging a plurality of data sources having factors associated with aircraft maintenance. A query module receives a set of one or more maintenance tasks for a given aircraft, including factors for the aircraft such as its movement schedule and its configuration. The query module identifies an initial estimated duration of the maintenance task(s) by examining aircraft maintenance manual durations and/or historical maintenance durations associated with similar aircraft. With the initial duration estimate, the query module also examines factor differences between the current query task and the task used for the initial estimations. The analysis may include data such as structural model information of aircraft, equipment and maintenance facilities information, information relating to the mechanics at certain maintenance facilities, and environmental information such as the weather predicted at the time of the maintenance, runway closures at particular airports, air traffic limitations, and security holds. The query module calculates an estimated duration for the query maintenance task based on the initial estimate, and may adjust the initial estimate based on the factor differences. Therefore, a user can more effectively plan a course of action for aircraft maintenance by having a more reliable prediction of the time required to perform the maintenance task.

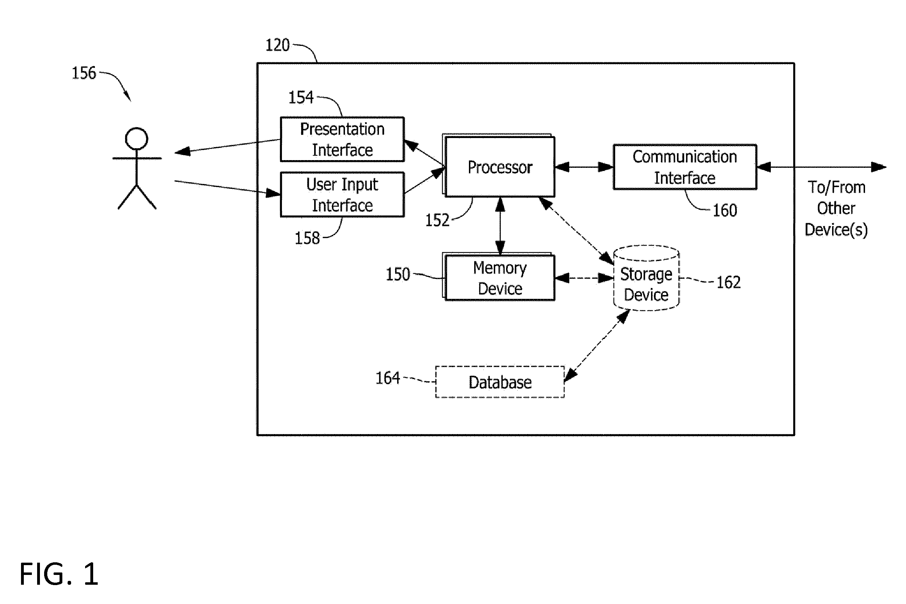

FIG. 1 is a block diagram of an exemplary computing system 120 that may be used for estimating maintenance task durations. Alternatively, any computer architecture that enables operation of the systems and methods as described herein may be used.

In the exemplary embodiment, computing system 120 includes a memory device 150 and a processor 152 operatively coupled to memory device 150 for executing instructions. In some embodiments, executable instructions are stored in memory device 150. Computing system 120 is configurable to perform one or more operations described herein by programming processor 152. For example, and without limitation, processor 152 may be programmed by encoding an operation as one or more executable instructions and providing the executable instructions in memory device 150. Processor 152 may include one or more processing units, e.g., without limitation, in a multi-core configuration.

In the exemplary embodiment, memory device 150 is one or more devices that enable storage and retrieval of information such as executable instructions and/or other data. Memory device 150 may include one or more tangible, non-transitory computer-readable media, such as, without limitation, random access memory (RAM), dynamic random access memory (DRAM), static random access memory (SRAM), a solid state disk, a hard disk, read-only memory (ROM), erasable programmable ROM (EPROM), electrically erasable programmable ROM (EEPROM), and/or non-volatile RAM (NVRAM) memory. The above memory types are exemplary only, and are thus not limiting as to the types of memory usable for storage of a computer program.

Also, in the exemplary embodiment, memory device 150 may be configured to store information associated with maintenance tasks and the estimation of maintenance task durations.

In some embodiments, computing system 120 includes a presentation interface 154 coupled to processor 152. Presentation interface 154 presents information, such as a user interface and/or an alarm, to a user 156. For example, and without limitation, presentation interface 154 may include a display adapter (not shown) that may be coupled to a display device (not shown), such as a cathode ray tube (CRT), a liquid crystal display (LCD), an organic LED (OLED) display, and/or a hand-held device with a display. In some embodiments, presentation interface 154 includes one or more display devices. In addition, or alternatively, presentation interface 154 may include an audio output device (not shown), e.g., an audio adapter and/or a speaker.

In some embodiments, computing system 120 includes a user input interface 158. In the exemplary embodiment, user input interface 158 is coupled to processor 152 and receives input from user 156. User input interface 158 may include, for example, and without limitation, a keyboard, a pointing device, a mouse, a stylus, and/or a touch sensitive panel, e.g., a touch pad or a touch screen. A single component, such as a touch screen, may function as both a display device of presentation interface 154 and user input interface 158.

Further, a communication interface 160 is coupled to processor 152 and is configured to be coupled in communication with one or more other devices, such as, without limitation, another computing system 120, and any device capable of accessing computing system 120 including, without limitation, a portable laptop computer, a personal digital assistant (PDA), and a smart phone. Communication interface 160 may include, without limitation, a wired network adapter, a wireless network adapter, a mobile telecommunications adapter, a serial communication adapter, and/or a parallel communication adapter. Communication interface 160 may receive data from and/or transmit data to one or more remote devices. For example, communication interface 160 of one computing system 120 may transmit transaction information to communication interface 160 of another computing system 120. Computing system 120 may be web-enabled for remote communications, for example, with a remote desktop computer (not shown).

Also, presentation interface 154 and/or communication interface 160 are both capable of providing information suitable for use with the methods described herein, e.g., to user 156 or another device. Accordingly, presentation interface 154 and communication interface 160 may be referred to as output devices. Similarly, user input interface 158 and communication interface 160 are capable of receiving information suitable for use with the methods described herein and may be referred to as input devices.

Further, processor 152 and/or memory device 150 may also be operatively coupled to a storage device 162. Storage device 162 is any computer-operated hardware suitable for storing and/or retrieving data, such as, but not limited to, data associated with a database 164. In the exemplary embodiment, storage device 162 is integrated in computing system 120. For example, computing system 120 may include one or more hard disk drives as storage device 162. Moreover, for example, storage device 162 may include multiple storage units such as hard disks and/or solid state disks in a redundant array of inexpensive disks (RAID) configuration. Storage device 162 may include a storage area network (SAN), a network attached storage (NAS) system, and/or cloud-based storage. Alternatively, storage device 162 is external to computing system 120 and may be accessed by a storage interface (not shown).

Moreover, in the exemplary embodiment, database 164 includes a variety of static and dynamic data associated with, without limitation, estimating maintenance task durations, as discussed in greater detail below.

The embodiments illustrated and described herein as well as embodiments not specifically described herein but within the scope of aspects of the disclosure, constitute exemplary means for estimating maintenance task durations. For example, computing system 120, and any other similar computing system added thereto or included within, when integrated together, include sufficient computer-readable storage media that is/are programmed with sufficient computer-executable instructions to execute processes and techniques with a processor as described herein. Specifically, computing system 120 and any other similar computing system added thereto or included within, when integrated together, constitute an exemplary means for recording, storing, retrieving, and displaying operational data associated with a system (not shown in FIG. 1) for estimating maintenance task durations.

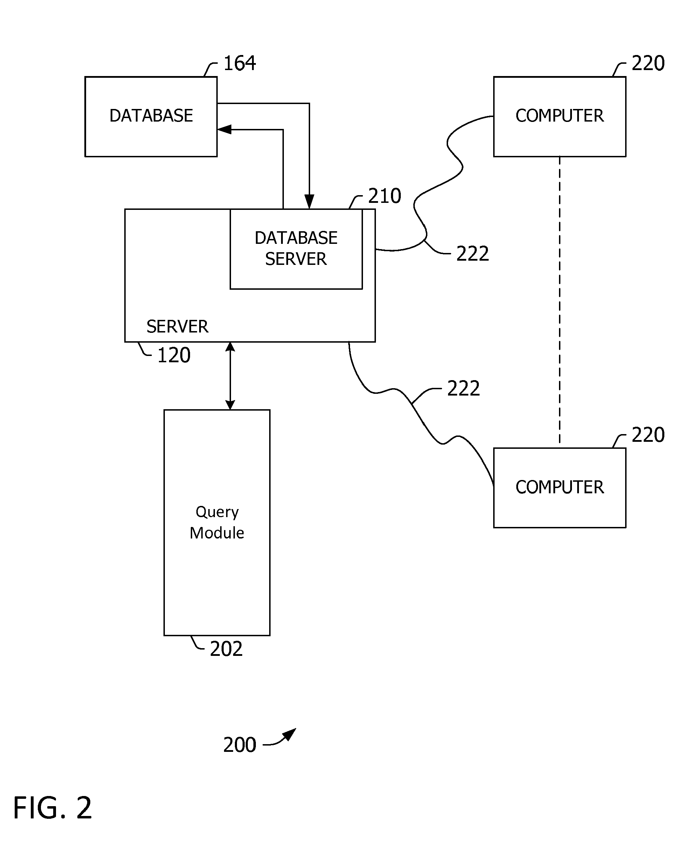

FIG. 2 is a simplified block diagram of an exemplary system 200 for estimating maintenance task durations using computing system 120. More specifically, in the exemplary embodiment, system 200 includes computing system 120, and a plurality of client sub-systems, also referred to as client systems 220, in communication with computing system 120. In one embodiment, client systems 220 are computers including a web browser, such that computing system 120 is accessible to client systems 220 using the Internet. Client systems 220 are interconnected to the Internet through many interfaces including a network 222, such as a local area network (LAN) or a wide area network (WAN), dial-in-connections, cable modems, and special highspeed Integrated Services Digital Network (ISDN) lines. Client systems 220 could be any device capable of interconnecting to the Internet including a web-based phone, PDA, or other web-based connectable equipment. Alternatively, any method of communicatively coupling computing system 120 to client systems 220 that enables operation of the system and method as described herein may be used.

A database server 210 is connected to database 164, which contains information on a variety of matters, as described below in greater detail. In one embodiment, centralized database 164 is stored on computing system 120 and can be accessed by potential users at one of client systems 220 by logging onto computing system 120 through one of client systems 220. In an alternative embodiment, database 164 is stored remotely from computing system 120, and may be non-centralized.

Database 164 may include a single database having separated sections or partitions or may include multiple databases, each being separate from each other. In the exemplary embodiment, database 164 stores aircraft maintenance manual durations. Database 164 may also store historical durations associated with actual maintenance activities in the past. Further, database 164 may store data about semantic structural models of aircraft. Database 164 may also store information about equipment and maintenance facilities for airports. As discussed below, mechanic data is stored within database 164, including data about individual mechanics, such as work schedules, certification levels, and experience levels. Environmental data, i.e., weather data, may also be stored within database 164.

In the example embodiment, computing system 120 is used by an entity associated with managing maintenance tasks for complex equipment. In the example embodiment, computing system 120 is used by an airline operator who manages aircraft maintenance tasks. Computing system 120 may be used for estimating maintenance task durations associated with aircraft.

Further, in the exemplary embodiment, system 200 includes a query module 202 in communication with computing system 120 and database server 210. In some embodiments, query module 202 is in communication with a plurality of computing systems 120 and a plurality of database servers 210. Further, in some embodiments, query module 202 may be a set of computer instructions executing on computing system 120. In still other embodiments, query module 202 may execute on client system 220. During operation, query module 202 performs operations associated with estimating maintenance task durations using the computing systems 120 and database servers 210, as discussed in greater detail below.

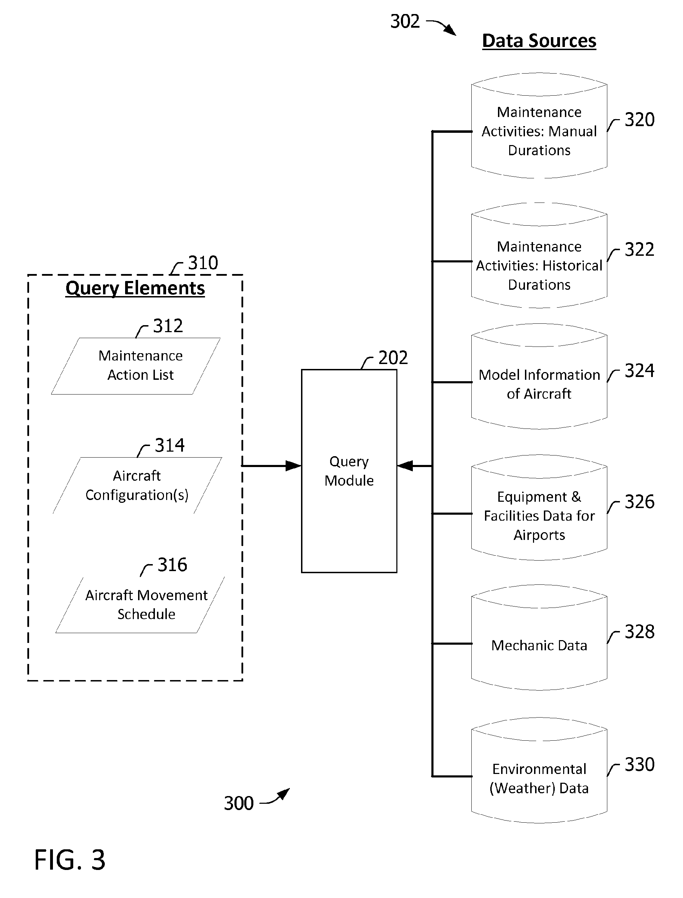

FIG. 3 is a data flow diagram 300 of an exemplary plurality of data sources 302 that may be used by query module 202 during estimation of maintenance task durations. In some embodiments, data sources 302 reside in database 164 (shown in FIG. 2). Alternatively, data sources 302 may reside in any database or plurality of databases that enables operation of the operation of the system and method described herein.

In the exemplary embodiment, a query relating to aircraft maintenance is submitted to query module 202. The query includes query elements 310, including a query maintenance action required list 312 which includes one or more maintenance tasks. As used herein, the term "maintenance task" refers, generally, to a task to be performed on a piece of equipment. More specifically, in some embodiments, the maintenance task refers to a task to be performed on an aircraft. Further, in some embodiments, maintenance action list 312, and each of its maintenance tasks, may be associated with a particular, uniquely identifiable aircraft. Alternatively, maintenance action list 312 may identify may refer to a type of aircraft in general.

Also, in the exemplary embodiment, query elements 310 includes one or more query factors. These query factors relate to the task to be performed on the particular aircraft, and may include one or more of an aircraft's configuration 314 information and an aircraft's movement schedule 316. While these data are shown together as a single query submitted to query module 202 in this exemplary embodiment, it should be understood that one or more of the query factors, such as aircraft configuration 314 and aircraft movement schedule 316, may be gathered from other sources of data based on information provided in the maintenance task, such as an aircraft identification number or an aircraft type. For example, and without limitation, a maintenance task may include an aircraft identification number along with a task name or identifier to be performed, and the query factors of aircraft configuration and movement schedule may be populated into query elements 310 from data sources using, for example, the aircraft identification number, to determine where that aircraft is going to be, and how that aircraft is currently configured. Further, one or more query factors otherwise limiting the task duration estimation may also be provided. For example, and without limitation, the query may specify a specific airport at which the maintenance will be performed, or a particular mechanic that will perform the task.

Further, in the exemplary embodiment, data sources 302 provides various data that informs query module 202 during the process of estimating maintenance task durations. In some embodiments, aircraft maintenance manual durations 320 are provided. These manual durations 320 represent base times to complete certain tasks on certain types of aircraft, as are often provided by manufacturers of complex equipment, such as aircraft manufacturers. Manual durations 320 represent average estimations as to how long a given task will take without specific consideration of other situational variables that may be present.

Data sources 302 also include historical durations 322 of maintenance activities. Historical durations 322 is a repository of historical maintenance tasks that have been performed in the past, and includes at least the task performed and the actual duration taken to perform the task. Historical durations 322 may also include situational variables present at the time of the tasks such as, without limitation, weather conditions, site of the maintenance task, particular aircraft the task was performed on, particular equipment used during the task, time of day of the task performance, and experience information associated with who performed the task.

In the exemplary embodiment, data sources 302 further includes model information 324 of aircrafts, such information including, without limitation, aircraft model-specific design and construction details. Model information 324 refers to information about maintenance tasks for a particular aircraft, and how the physical structure of the aircraft may relate those tasks. For example, and without limitation, if a certain engine part needs to be removed to perform both Task A and Task B on a particular aircraft type, and that portion of the operation takes 1 hour, then by performing both Task A and Task B together during the same maintenance action, time savings may be realized. Such model information 324 may be used to inform query module 202 during estimation of such maintenance task durations.

Also, in the exemplary embodiment, data sources 302 includes equipment and facilities data 326 for various maintenance sites. Certain tasks may require the presence of a piece of equipment to perform the task, or certain tasks may take less time if performed with the piece of equipment. Further, some facilities may have greater access to replacement parts, for example, and without limitation, as a function of their geographical location to suppliers or as a function of on-site storage facilities. Some facilities may have differences in location of equipment at the maintenance site. For example, some maintenance equipment may be shared between maintenance groups, and thus may incur a time penalty for transporting the equipment between groups. Also, the age of maintenance equipment may play a factor. For example, if one maintenance facility has revision "C" of the maintenance equipment that requires a manual set up and calibration procedure, but another facility has revision "D" of the equipment that has an automated set up and calibration procedure, such a factor may reduce the task duration estimate at the second site as compared to the first site. Further, some facilities may include streamlined paperwork processing. For example, some facilities may be equipped with wearable computing devices such that review and completion of necessary paperwork associated with maintenance tasks may be performed at or adjacent to the work site, where others may require manual processing that then requires transcribing into a computer system. And additionally, some facilities may utilize contractors for maintenance tasks, which may require extra approval steps prior to completion, relative to use of a direct employee.

Further, in the exemplary embodiment, data sources 302 includes data about mechanics 328 at various locations, and may include information such as number of mechanics at a site, and individual mechanic information such as experience level, area of ability, certifications, and working hours. Query module 202 may consider such information during task planning and estimation. For example, some tasks may require a certified mechanic. Other tasks may be performed more quickly by mechanics experienced with the task to be performed, and thus if the task is planned at a site with the experienced mechanic, and during his shift, then time benefits may be realized.

Data sources 302, in the exemplary embodiment, also includes environmental data 330 related to the maintenance facilities. Such environmental data 330 may include, without limitation, information relating to weather predictions at maintenance facilities, runway closures or other air traffic limitations at adjoining airports, or security holds. Some operations may be impacted by adverse weather, such as operations performed by mechanics while exposed to the elements. Other operations may require temperatures above or below a certain threshold, or a humidity level above or below a particular threshold. Further, conducting some operations during daylight hours may result in shorter task durations. Query module 202 may include both feasibility and timing considerations of the weather at a given location.

In operation, in the exemplary embodiment, query module 202 receives the query elements 310 including at least maintenance action list 312 having one or more maintenance tasks, along with an identification of an aircraft type or a particular aircraft. Query module 202 may also receive query factors, such as aircraft configuration 314 information, and aircraft movement schedule 316. Alternatively, query module 202 may identify the query factors based on information provided in maintenance action list 312. After identifying the maintenance tasks and other query factors, query module 202 then accesses and analyzes data sources 302 to produce a maintenance task duration estimate for the maintenance action list 312 given the restraints of the provided query factors. The operations of query module 202 are described in greater detail below.

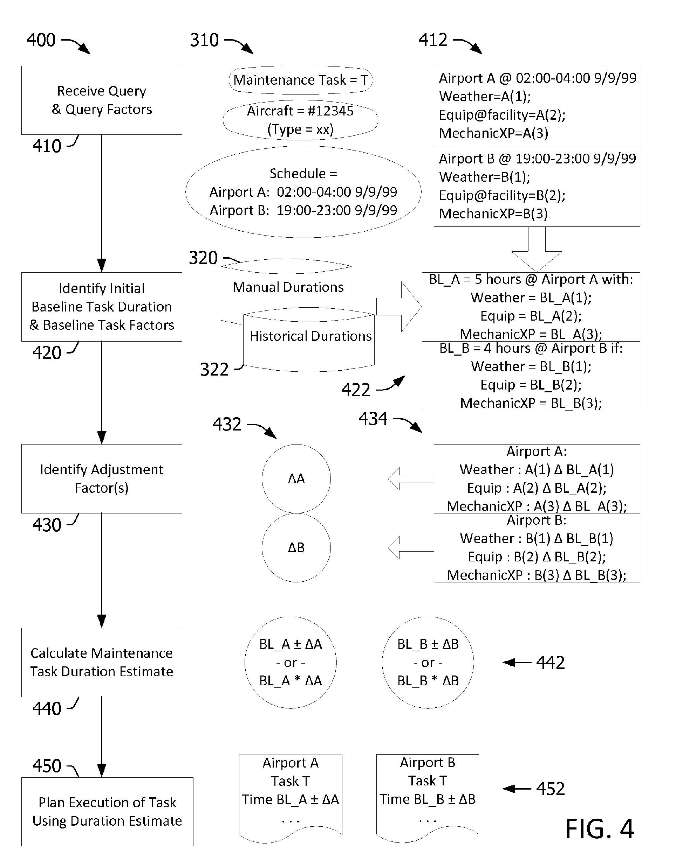

FIG. 4 is a block diagram of an exemplary method 400 for estimating maintenance task durations using query module 202 (shown in FIG. 2) and data from data sources 302 (shown in FIG. 3). Method 400 is implemented by at least one computing system 120 (shown in FIG. 1) including at least one processor 152 (shown in FIG. 1) and at least one memory device 150 (shown in FIG. 1) coupled to the at least one processor 152.

In the exemplary embodiment, a query is received 410. The query includes query elements 310 such as, for example, a maintenance task T, an aircraft identification number "12345", and a schedule for the particular aircraft. In operation, query module 202 generates one or more possible maintenance scenarios 412. In some embodiments, query module 202 may generate maintenance scenarios 412 based on a known schedule of the aircraft, and may include information about the possible maintenance locations such as "Airport A" and "Airport B." For example, "aircraft 12345" is projected to have a maintenance window at "Airport A" between 02:00 and 04:00 on 9/9/99, where the weather is expected to be "A(1)", the equipment and facility conditions at that maintenance site are a set "A(2)", and the mechanic experience set at that site is "A(3)". Further, "aircraft 12345" is also projected to have a maintenance window at "Airport B" between 19:00 and 23:00 on that same day, where the weather is expected to be "B(1)", the equipment and facility conditions at that maintenance site are a set "B(2)", and the mechanic experience set at that site is "B(3)". In other embodiments, schedule information may not be known or provided to query module 202, and thus may not be available for schedule identification. Query module 202 may still provide maintenance task estimates by either using direct identification of one or more airports as candidates for the maintenance tasks, or without direct knowledge of the airport by alternatively using one or more direct inputs associated with other factors described herein.

Also, in the exemplary embodiment, method 400 identifies 420 an initial baseline task duration and factors associated with the estimate. This initial baseline task duration represents an initial estimate as to how long the given tasks may take. In some embodiments, query module 202 may correlate the maintenance task, T, and the aircraft type, xx, with a database including manual durations 320. A baseline task duration may simply be the manual duration for the given one or more tasks. This approach may be necessary as a starting point if no appropriate historical duration data on maintenance task durations is available.

In other embodiments, such as when there is a large volume of historical duration data available and appropriate to the task, query module 202 may utilize a database including historical durations 322. Query module may search historical durations 322 and identify one or more historical maintenance tasks 422 having maintenance task factors similar to the present query maintenance task, i.e., a "nearest neighbor" to the query task in a query space, where the query space is associated with the query task and query task factors. As used herein, the term "nearest neighbor" refers to a historical maintenance task 422 that is similar to the query task in relation to the query task factors. Such query task factors may be thought of as variables, each of which defines a dimension in a space. A historical maintenance task may then be described as "near" to a query task, in one or more dimensions of the query space, if the historical task's factors are similar to or identical to the query task values for those same variables.

For example, for a maintenance task, T, on an aircraft type, xx, query module 202 may identify a historical maintenance task at "Airport A". One of these historical tasks 422 was performed with weather of "BL_A(1)", which is similar or identical to weather "A(1)". The prefix "BL" in FIG. 4 indicates association with a "Base Line" task. The historical task was also performed with equipment and facility conditions at the maintenance site are a set "BL_A(2)", which is similar or identical to equipment set "A(2)". And further, the historical maintenance task was performed with mechanic experience set of "BL_A(3)", which is similar or identical to mechanic experience set "A(3)". After finding a historical task similar in characteristics to the existing set of query tasks and task factors, query module 202 identifies the duration of the historical task, "BL_A = 5 hours", as the baseline task duration, and identifies the historical task factors as the task factors associated with the baseline task duration. Similarly, if the query task were to be performed at "Airport B", query module 202 may identify a different historical task, and identify a different baseline task duration of "BL_B = 4 hours".

Further, in some embodiments, when identifying historical tasks 422, query module 202 may identify multiple historical tasks, or multiple "nearest neighbors", that are similar to the maintenance task T. Such similar tasks may have differing actual results, and may have differing factors. Query module 202 may utilize these multiple historical tasks by aggregating the several results, and thus may provide a better initial baseline task duration. In some embodiments, each individual result may be individually weighted in computing the average, such as a relative weighting based on similarity to the query task and factors. Further, in such an embodiment, the task factors associated with such an average result will no longer represent the factors of any single historical duration. As such, the baseline task factors may require averaging or adjusting as well, thereby providing an approximation of the conditions present in the "average result" scenario.

In still other embodiments, such as when there is historical data available but such data is sparse or dissimilar to the query task factors, query module 202 may implement a hybrid approach when identifying 420 the initial baseline task duration. Such a hybrid approach may consider both the manual durations 320 of the one or more maintenance tasks, as well as an analysis of historical durations 322. During such an approach, the manual duration component may be weighted relative to confidence factors associated with the historical durations. For example, if multiple similar historical durations are identified, then confidence in such history may marginalize the need for and reliance on the manual duration for the query tasks. As such, the manual duration may be weighted at or near zero relative to the historical durations. However, if the historical durations identified are not very similar to the query tasks, or if there are very few historical durations identified, then query module 202 may weigh more heavily toward the manual durations, thereby marginalizing the historical durations.

Once an initial baseline task duration and baseline task factors have been identified, method 400 then identifies 430 adjustment factors to apply to the baseline task duration. Query module 202 compares the query factors against the baseline task factors, as shown by the factors differences 434. The symbol "Δ", as used in FIG. 4, represents differences between the argument before and the argument after the symbol. Differences between the query factors and the baseline task factors, e.g., "Weather at A(1) Δ Weather at BL_A(1)", represent differences that may warrant further adjustment of the estimated duration, i.e., the baseline task duration. For example, if the baseline task was performed during rainy weather conditions, but the current query task predicts sunny weather conditions, this represents a difference between the baseline task and the current task for which query module 202 may adjust by slightly lowering the estimated task duration. Further, there may be multiple adjustments made for a given scenario. For example, if the baseline task was also performed by a more experienced mechanic than the current query task predicts, query module 202 may adjust by slightly raising the estimated time. Moreover, such adjustment factors 432 may be represented by an adjustment by unit time, e.g., adding or subtracting 10 minutes to a task duration estimation. Alternatively, such adjustment factors 432 may be represented by a factor multiplier, e.g., adding 20% to a task estimate. Further, such differences or adjustment factors 432 may be aggregated. Such aggregation may be performed using known techniques such as, without limitation, summation, multiplication, convolution, simulation, Monte Carlo techniques, and conditional probability distributions. Further, weightings may be applied to the aggregation, and may consider covariance. The exact technique applied may depend upon the factor. For example, some factor differences may favor an additive effect, such as having to transport a piece of maintenance equipment from one maintenance site to another, for which a fixed amount of time may express the most accurate compensation. Others may favor a multiplicative effect, such as performing a cleaning operation under windy conditions in a dusty desert atmosphere, for which a percentage of a base time may express the most accurate compensation.

In the exemplary embodiment, once all known adjustment factors 432 are identified 430, then query module 202 calculates 440 one or more maintenance task duration estimates 442 based at least in part on the initial baseline task duration and the one or more adjustment factors 432. For example, the initial baseline task duration for "Airport A", "BL_A = 5 hours", is then adjusted by the corresponding adjustment differences 432, "± ΔA", for a maintenance task duration estimate of "5 hours ± ΔA". Similarly, the initial baseline task duration for "Airport B", "BL_B = 4 hours", is adjusted by "± ΔB", for a maintenance task duration estimate of "B ± ΔB".

After having calculated 440 the one or more maintenance task duration estimates 442, query module 202 then plans 450 execution of the first query maintenance task based at least in part on the maintenance task duration estimates 442. In some embodiments, query module 202 generates a maintenance schedule 452 based at least in part on the maintenance task duration estimates 442. The maintenance schedule and/or the first query maintenance task may be executed by a maintenance technician, such as, for example, an aircraft maintenance technician, and may be executed based at least in part on the planning 450. As used herein, the term "maintenance schedule" includes at least the location at which a maintenance task may be performed, and may further include a time or period of time during which the task maybe performed, and may include additional task-related information such as, without limitation, mechanic assignments, equipment assignments, and work orders associated with the maintenance task. In some embodiments, query module 202 may generate a maintenance plan or a work order. As used herein, the term "maintenance plan" includes information related to the execution of the maintenance task, such as, and without limitation, a list of sub-tasks to be performed and an itinerary of performance of the task and sub-tasks. In still other embodiments, maintenance task duration estimates 442 may be input to other computing systems such as, for example, a flight scheduling tool such as to enable a further estimate of delay incurred by flights due to maintenance tasks.

In some embodiments, when more than one maintenance scenario 412 has been calculated 440, query module 202 may automatically select the scenario with the lowest estimated maintenance time. Alternatively, in other embodiments, a user may be presented with the options and allowed to select which scenario to perform. In still other embodiments, query module 202 may maintain a confidence factor associated with each scenario, and the confidence factor may further influence which scenario is selected.

In another exemplary embodiment, maintenance action list 312 of query elements 310 includes an aircraft of type xx having a fault in an Air Condition Flow Control and Shut Off Valve, as well as an associated Primary Heat Exchanger in need of cleaning. The affected aircraft has aircraft configuration 314 including the standard configuration air conditioning system. Further, the aircraft's movement schedule 316 includes a potential maintenance window at Airport A, a desert region airport with significant dust in the air, and later at Airport B, an airport predicted to have more benign conditions. Each of these conditions provides the query elements 310 received 410 by query module 202.

During analysis, query module 202 consults manual durations 320 database and finds that the "book time" estimate for replacing the Air Conditioning Flow Control Shut Off Valve is one hour, and the cleaning of the Primary Heat Exchanger is 20 minutes. Query module 202 also consults historical durations 322 database to find that an average time for replacing the Air Conditioning Flow Control Shut Off Valve is 45 minutes, and the Primary Heat Exchanger cleaning operation takes 15 minutes. Further, based on model information of aircraft 324, combining the two tasks based on common access route gives a task time of 55 minutes because both activities are located in the same equipment bay. This 55 minutes represents the identified 420 initial baseline task duration.

In this exemplary embodiment, no adjustment is made based on mechanic skill because the mechanic skill level is average. However, at Airport A, windy conditions are found from environmental data 330. Historical records estimate a 60% increase in cleaning time under such conditions, thereby representing an adjustment factor 432. If no other adjustments are identified, the adjusted task time at Airport A for the combined task is one hour and one minute. Similarly, if the maintenance is performed at Airport B, no adjustment factor due to environment would be incurred, and thus the maintenance duration there would be 55 minutes.

The above-described system and method facilitates estimating maintenance task durations for complex machinery such as aircraft. The embodiments described herein take a query that includes a set of one or more maintenance tasks associated with an aircraft. The query may include factors associated with the aircraft, such as aircraft schedule and aircraft configuration information. An initial baseline task duration estimation is identified using a database having manual durations and historical durations. The initial baseline task duration is thereafter adjusted based on factor differences between the current task and the task used for the baseline estimate. Information such as structural model of aircraft, equipment and maintenance facility data, mechanic data, and environmental data inform the comparison. A maintenance task duration estimate is generated from the initial baseline estimation, with adjustments based on the factors. From the task duration estimate, maintenance is planned for the aircraft for execution by a maintenance technician.

A beneficial effect of the methods and systems described herein includes at least one of: (a) leveraging historical maintenance duration data to more accurately predict maintenance task duration based on historical knowledge; (b) leveraging factors associated with the current task to tailor the task duration estimation; (c) comparing factors associated with the current task to the factors present at the time of historical events; (d) providing duration information to other tangentially systems, thereby allowing other adjustments based on more accurate maintenance duration estimates; and (e) leveraging various sources of data and types of data to enhance duration estimation and more efficiently perform maintenance tasks.

Exemplary embodiments of systems and methods for automatic model identification and creation with high scalability are described above in detail. The systems and methods described herein are not limited to the specific embodiments described herein, but rather, components of systems and/or steps of the methods may be utilized independently and separately from other components and/or steps described herein. For example, the methods may also be used in combination with other systems requiring distributed computing systems and methods, and are not limited to practice with only the automatic model identification and creation with high scalability systems and methods as described herein. Rather, the exemplary embodiments can be implemented and utilized in connection with many other concept extraction applications.

Although specific features of various embodiments may be shown in some drawings and not in others, this is for convenience only. In accordance with the principles of the systems and methods described herein, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined in the following numbered clauses:
1. A computer-implemented method for estimating maintenance task durations, said method implemented by at least one computing system including at least one processor and at least one memory device coupled to the at least one processor, said method comprising:
   receiving a query including a first query maintenance task and a plurality of query factors;
   identifying an initial baseline task duration and a plurality of baseline task factors based at least in part on the first query maintenance task;
   identifying at least one adjustment factor based at least in part on the differences between the plurality of query factors and the plurality of baseline task factors;
   calculating a maintenance task duration estimate based at least in part on the initial baseline task duration and the one or more adjustment factors; and
   planning execution of the first query maintenance task based at least in part on the maintenance task duration estimate.
2. The method in accordance with Clause 1, further comprising executing the first query maintenance task based at least in part on said planning.
3. The method in accordance with any preceding Clause, wherein receiving a query comprises receiving a query including an aircraft equipment type, an aircraft maintenance operation to be performed, and a plurality of query factors including at least one of environmental factors and maintenance personnel factors.
4. The method in accordance with any preceding Clause, wherein identifying at least one adjustment factor includes evaluating one or more of weather information at a maintenance site, equipment information at a maintenance site, and mechanic information at a maintenance site.
5. The method in accordance with any preceding Clause, wherein identifying an initial baseline task duration comprises identifying an initial baseline task duration from a plurality of historical maintenance task events based at least in part on the first query maintenance task.
6. The method in accordance with any preceding Clause, wherein identifying an initial baseline task duration further comprises identifying a nearest neighbor in a query space of the query based at least in part on at least one of the plurality of query factors.
7. The method in accordance with any preceding Clause, wherein identifying an initial baseline task duration further comprises:
   identifying a plurality of nearest neighbors in a query space of the query based at least in part on at least one of the plurality of query factors; and
   aggregating task durations of the plurality of nearest neighbors.
8. The method in accordance with any preceding Clause, wherein receiving a query comprises receiving a query further including a second query maintenance task, wherein identifying at least one adjustment factor further comprises identifying an adjustment factor based at least in part on performing the first query maintenance task and the second query maintenance task together.
9. The method in accordance with any preceding Clause, wherein identifying at least one adjustment factor comprises evaluating a semantic model of a type of equipment associated with the query in relation to the first query maintenance task and the second query maintenance task.
10. A system for estimating maintenance task duration, said system comprising at least one computing system comprising:
   at least one database comprising:
      a plurality of historical maintenance task events, each historical maintenance task event of said plurality of historical maintenance task events comprising a plurality of event factors; and
      a plurality of baseline task durations, each baseline task duration of said plurality of baseline task durations associated with a maintenance task; and
      at least one query module configured to:
   receive a query comprising a first query maintenance task and a plurality of query factors;
   identify an initial baseline task duration and a plurality of baseline task factors from one of said plurality of baseline task durations and said plurality of historical maintenance task events based at least in part on said first query maintenance task;
   identify at least one adjustment factor based at least in part on the differences between said plurality of query factors and said plurality of baseline task factors;
   calculate a maintenance task duration estimate based at least in part on said initial baseline task duration and said one or more adjustment factors; and
   plan execution of the first query maintenance task based at least in part on the maintenance task duration estimate.
11. The system in accordance with any preceding Clause, wherein said first query maintenance task comprises an aircraft equipment type and an aircraft maintenance operation to be performed, wherein said plurality of query factors comprises at least one of environmental factors and maintenance personnel factors.
12. The system in accordance with any preceding Clause, wherein said at least one query module is further configured to identify at least one adjustment factor based at least in part on evaluation of one or more of weather information at a maintenance site, equipment information at a maintenance site, and mechanic information at a maintenance site.
13. The system in accordance with any preceding Clause, wherein said at least one query module is further configured to identify an initial baseline task duration from said plurality of historical maintenance task events based at least in part on said first query maintenance task.
14. The system in accordance with any preceding Clause, wherein said at least one query module is further configured to identify an initial baseline task duration based at least in part on identifying a nearest neighbor in a query space of said query based at least in part on one or more of said plurality of query factors.
15. The system in accordance with any preceding Clause, wherein said query further comprises a second query maintenance task, wherein said at least one query module is further configured to identify one or more adjustment factors based at least in part on identifying an adjustment factor based at least in part on performing said first query maintenance task and said second query maintenance task together.
16. The system in accordance with any preceding Clause, wherein said at least one query module is further configured to identify said adjustment factor based at least in part on evaluating a semantic model of a type of equipment associated with said query in relation to said first query maintenance task and said second query maintenance task.
17. One or more computer-readable storage media having computer-executable instructions embodied thereon, wherein when executed by at least one processor, the computer-executable instructions cause the processor to:
   receive a query comprising a first query maintenance task and a plurality of query factors;
   identify an initial baseline task duration and a plurality of baseline task factors based at least in part on the first query maintenance task;
   identify one or more adjustment factors based at least in part on the differences between the plurality of query factors and the plurality of baseline task factors;
   calculate a maintenance task duration estimate based at least in part on the initial baseline task duration and the one or more adjustment factors; and
   plan execution of the first query maintenance task based at least in part on the maintenance task duration estimate.
18. The computer-readable storage media in accordance with any preceding Clause, wherein the computer-executable instructions further cause the processor to identify at least one adjustment factor based at least in part on evaluation of one or more of weather information at a maintenance site, equipment information at a maintenance site, and mechanic information at a maintenance site.
19. The computer-readable storage media in accordance with any preceding Clause, wherein the computer-executable instructions further cause the processor to identify an initial baseline task duration from a plurality of historical maintenance task events based at least in part on the first query maintenance task.
20. The computer-readable storage media in accordance with any preceding Clause, wherein the computer-executable instructions further cause the processor to identify an initial baseline task duration from a plurality of historical maintenance task events wherein identifying the initial baseline task duration includes identifying a nearest neighbor in a query space of the query based at least in part on at least one of the plurality of query factors.

## Claims

1. A system (200) for estimating maintenance task duration, said system (200) comprising at least one computing system (120) comprising:
at least one database (164) comprising:
a plurality of historical maintenance task events (322), each historical maintenance task event of said plurality of historical maintenance task events (322) comprising a plurality of event factors; and
a plurality of baseline task durations (320), each baseline task duration of said plurality of baseline task durations (320) associated with a maintenance task; and
at least one query module (202) configured to:
receive a query (310) comprising a first query maintenance task (312) and a plurality of query factors (314, 316);
identify an initial baseline task duration (422) and a plurality of baseline task factors (422) from one of said plurality of baseline task durations (320) and said plurality of historical maintenance task events (322) based at least in part on said first query maintenance task (312);
identify at least one adjustment factor (432) based at least in part on the differences between said plurality of query factors (314, 316) and said plurality of baseline task factors (422);
calculate a maintenance task duration estimate (442) based at least in part on said initial baseline task duration (422) and said one or more adjustment factors (432); and
plan execution of the first query maintenance task (312) based at least in part on the maintenance task duration estimate (442).

2. The system in accordance with Claim 1, wherein said first query maintenance task (312) comprises an aircraft equipment type and an aircraft maintenance operation to be performed, wherein said plurality of query factors (314, 316) comprises at least one of environmental factors (330) and maintenance personnel factors (328).

3. The system in accordance with either of Claim 1 or 2, wherein said at least one query module (202) is further configured to identify at least one adjustment factor (432) based at least in part on evaluation of one or more of weather information at a maintenance site, equipment information at a maintenance site, and mechanic information at a maintenance site.

4. The system in accordance with any of the preceding Claims, wherein said at least one query module (202) is further configured to identify an initial baseline task duration (422) from said plurality of historical maintenance task events (322) based at least in part on said first query maintenance task (312).

5. The system in accordance with Claim 4, wherein said at least one query module (202) is further configured to identify an initial baseline task duration (422) based at least in part on identifying a nearest neighbor in a query space of said query (310) based at least in part on one or more of said plurality of query factors (314, 316).

6. The system in accordance with any of the preceding Claims, wherein said query (310) further comprises a second query maintenance task (312), wherein said at least one query module (202) is further configured to identify one or more adjustment factors (432) based at least in part on identifying an adjustment factor based at least in part on performing said first query maintenance task (312) and said second query maintenance task (312) together.

7. The system in accordance with Claim 6, wherein said at least one query module (202) is further configured to identify said adjustment factor (432) based at least in part on evaluating a semantic model (324) of a type of equipment associated with said query (310) in relation to said first query maintenance task (312) and said second query maintenance task (312).

8. One or more computer-readable storage media having computer-executable instructions embodied thereon, wherein when executed by at least one processor (152), the computer-executable instructions cause the processor (152) to:
receive a query (310) comprising a first query maintenance task (312) and a plurality of query factors (314, 316);
identify an initial baseline task duration (422) and a plurality of baseline task factors (422) based at least in part on the first query maintenance task (312);
identify one or more adjustment factors (432) based at least in part on the differences between the plurality of query factors (314, 316) and the plurality of baseline task factors (422);
calculate a maintenance task duration estimate (442) based at least in part on the initial baseline task duration (422) and the one or more adjustment factors (432); and
plan execution of the first query maintenance task (312) based at least in part on the maintenance task duration estimate (442).

9. The computer-readable storage media in accordance with Claim 8, wherein the computer-executable instructions further cause the processor (152) to identify at least one adjustment factor (432) based at least in part on evaluation of one or more of weather information at a maintenance site, equipment information at a maintenance site, and mechanic information at a maintenance site.

10. The computer-readable storage media in accordance with either of Claim 8 or 9, wherein the computer-executable instructions further cause the processor (152) to identify an initial baseline task duration (422) from a plurality of historical maintenance task events (322) based at least in part on the first query maintenance task (312).

11. A computer-implemented method for estimating maintenance task durations, said method implemented by at least one computing system including at least one processor and at least one memory device coupled to the at least one processor, said method comprising:
receiving a query (310) including a first query maintenance task (312) and a plurality of query factors (314,316);
identifying an initial baseline task duration (422) and a plurality of baseline task factors (422) based at least in part on the first query maintenance task (312);
identifying at least one adjustment factor (432) based at least in part on the differences between the plurality of query factors and the plurality of baseline task factors;
calculating a maintenance task duration estimate (442) based at least in part on the initial baseline task duration and the one or more adjustment factors; and
planning execution of the first query maintenance task (312) based at least in part on the maintenance task duration estimate (442).

12. The method in accordance with Claim 11, further comprising executing the first query maintenance task (312) based at least in part on said planning.

13. The method in accordance with either of Claim 11 or 12, wherein receiving a query (310) comprises receiving a query including an aircraft equipment type, an aircraft maintenance operation to be performed, and a plurality of query factors including at least one of environmental factors and maintenance personnel factors.

14. The method in accordance with any of claims 11 to 13, wherein identifying at least one adjustment factor (432) includes evaluating one or more of weather information at a maintenance site, equipment information at a maintenance site, and mechanic information at a maintenance site.

15. The method in accordance with any of claims 11 to 14, wherein identifying an initial baseline task duration (422) comprises identifying an initial baseline task duration from a plurality of historical maintenance task events based at least in part on the first query maintenance task.
